# EUROPÄISCHE PATENTSCHRIFT

(11) **EP 3 186 499 B1**
(45) Veröffentlichungstag und Bekanntmachung des Hinweises auf die Patenterteilung: **23.05.2018**
(21) Anmeldenummer: 15733727.0
(22) Anmeldetag: 01.07.2015
(51) Int. Cl.: F02M 35/12, F02M 35/08, H01M 8/04

(54) **NEBENSCHLUSSRESONATOR FÜR EINE FRISCHLUFTANLAGE EINER BRENNKRAFTMASCHINE**
SHUNT RESONATOR FOR AN AIR-INTAKE INSTALLATION OF AN INTERNAL COMBUSTION ENGINE
RÉSONATEUR SHUNT DESTINÉ À UN SYSTÈME D'AIR FRAIS D'UN MOTEUR À COMBUSTION INTERNE

(30) Priorität: 29.08.2014 DE 102014217334
(43) Veröffentlichungstag der Anmeldung: 05.07.2017
(73) Patentinhaber: MAHLE International GmbH, 70376 Stuttgart (DE)
(72) Erfinder: KOHLER, Samuel, 71093 Weil im Schönbuch (DE); FISCHER, Robert, 70435 Stuttgart (DE); BRILKE,Mathias, 71263 Weil der Stadt (DE)
(74) Vertreter: BRP Renaud & Partner mbB Rechtsanwälte Patentanwälte Steuerberater
(86) Internationale Anmeldenummer: PCT/EP2015/065020
(87) Internationale Veröffentlichungsnummer: WO 2016/030055

(56) Entgegenhaltungen:
- EP-A2- 1 043 494
- DE-A1- 10 058 479
- US-A1- 2003 136 386
- US-A1- 2007 227 513

## Beschreibung

Die Erfindung betrifft einen Nebenschlussresonator für eine Frischluftanlage einer Brennkraftmaschine und/oder einer Brennstoffzelle sowie eine Frischluftanlage mit wenigstens einem solchen Nebenschlussresonator. Die Erfindung betrifft ferner eine Brennkraftmaschine und/oder eine Brennstoffzelle mit einer solchen Frischluftanlage. Eine Frischluftanlage umfasst üblicherweise einen Frischlufttrakt zum Führen bzw. zum Definieren eines Frischluftpfads. Im Betrieb der Brennkraftmaschine strömt Frischluft entlang des Frischluftpfads durch den Frischlufttrakt zu den Brennräumen der Brennkraftmaschine. Bei einer aufgeladenen Brennkraftmaschine befindet sich in der Frischluftanlage eine Ladeeinrichtung wie zum Beispiel ein Verdichter eines Abgasturboladers angeordnet. Bei Kraftfahrzeugen mit Brennstoffzellenantrieb wird Frischluft der Kathode der Brennstoffzelle zugeführt, um auf diese Weise der Brennstoffzelle den als Reaktionspartner benötigten Sauerstoff zur Verfügung zu stellen.

Zur Verbesserung der Schalldämpfung in der Frischluftanlage kennt der Stand der Technik sogenannte Nebenschlussresonatoren, welche fluidisch und akustisch an den Frischlufttrakt der Frischluftanlage gekoppelt sind.

So offenbart etwa die DE 20 2005 011 669 U1 einen Nebenschlussresonator für eine Ansaugleitung einer Brennkraftmaschine. Der Nebenschlussresonator weist einen Hohlraum auf, der über eine rohrartige Verbindung mit der Ansaugleitung verbunden wird. Innerhalb der rohrartigen Verbindung ist ein aus einem porösen Material bestehendes Element angeordnet, welches durch den Nebenschlussresonator hervorgerufene akustische Resonanzerhöhungen reduziert.

Aus der US 2007/227513 A1 ist ein Nebenschlussresonator mit einem Absorber für verdampften Kraftstoff bekannt.

Als problematisch beim Einsatz von Nebenschlussresonatoren in Frischluftanlagen erweist sich, dass sich in dem einen solchen Nebenschlussresonator ausbildenden Hohlraum Flüssigkeit absetzen kann, die im Hohlraum ausgefrieren kann. Bei einer solchen Flüssigkeit kann es sich beispielsweise um Öl handeln, welches aus den Zylindern der mit der Frischluftanlage zusammenwirkenden Brennkraftmaschine stammt und gesammelt über eine sogenannte "Blowby"-Leitung in den Frischlufttrakt der Frischluftanlage zurückgeführt wird.

Lösen sich nun kleine Teile aus der im Nebenschlussresonator gefrorenen Flüssigkeit ab, so besteht die Gefahr, dass diese von der den Frischlufttrakt durchströmenden Frischluft mitgenommen werden und in der Folge etwa auf einen stromab des Nebenschlussresonators im Frischlufttrakt angeordneten Verdichter des Abgasturboladers treffen können. Die in einem solchen Szenario typischerweise mit sehr hoher Geschwindigkeit auf den Verdichter treffenden, gefrorenen Teilchen können zu erheblichen Beschädigungen am Verdichter, insbesondere an dessen Verdichterrad, führen.

Eine ähnliche Problematik, jedoch nicht im Zusammenhang mit einer Frischluftanlage, sondern einer der Brennkraftmaschine nachgeschalteten Abgasanlage betrifft die DE 10 2009 027 763 A1, welche ein System zum Einfangen von flüssigen Abgasbestandteilen, die von einer Brennkraftmaschine während beim Kaltstart erzeugt werden, beschreibt. Es ist eine Aufgabe der vorliegenden Erfindung, eine verbesserte Ausführungsform eines Nebenschlussresonators für eine Frischluftanlage zu schaffen, bei welcher die oben genannte Nachteile nicht mehr oder nur mehr in stark abgemilderter Form auftreten.

Diese Aufgabe wird durch den Gegenstand des unabhängigen Patentanspruchs gelöst. Bevorzugte Ausführungsformen sind Gegenstand der abhängigen Patentansprüche.

xxGrundgedanke der Erfindung ist demnach, ein einen Hohlraum begrenzendes Resonatorgehäuse eines Nebenschlussresonators innenseitig mit einem Flüssigkeitsabsorber aus einem Vlies und/oder einem Strukturschaum zum Aufnehmen von in den Hohlraum eintretender Flüssigkeit auszustatten. Somit kann in den Hohlraum eingetretene Flüssigkeit von besagtem Flüssigkeitsabsorber aufgenommen werden, anstatt dass diese an den Gehäusewänden des Resonatorgehäuses zu festen Teilchen ausgefrieren.

Ein Ausgefrieren der Flüssigkeit, nachdem diese bereits von dem Flüssigkeitsabsorber aufgenommen wurde, führt dazu, dass die ausgefrorene Flüssigkeit vom Vlies bzw. Strukturschaum stabil in dem Flüssigkeitsabsorber gehalten wird. Ein Ablösen von Teilen der ausgefrorenen Flüssigkeit von den Gehäusewänden des Resonatorgehäuses, wie eingangs im Zusammenhang mit herkömmlichen Nebenschlussresonatoren erwähnt, kann beim hier vorgestellten Nebenschlussresonator weitgehend oder sogar vollständig ausgeschlossen werden. Ein weiterer Vorteil bei der Verwendung eines Strukturschaums oder Vlieses besteht darin, dass beide Materialen auch akustisch dissipativ, also akustisch dämpfend wirken, wodurch die Geräuschentwicklung in der Frischluftanlage nicht unerheblich reduziert werden kann.

Die Gefahr, dass vom Resonatorgehäuse des Nebenschlussresonators abgelöste Teilchen aus gefrorener Flüssigkeit über den Frischlufttrakt mit Teilen des Abgasturboladers oder auch anderen Komponenten der Frischluftanlage in Kontakt geraten und in diesen Beschädigungen hervorrufen, kann mittels des hier vorgestellten, erfindungsgemäßen Nebenschlussresonator deutlich verringert oder sogar vollständig ausgeschlossen werden.

Als Vlies für den Flüssigkeitsabsorber mag insbesondere ein Faservlies aus Kunststofffasern in Betracht kommen. Unter dem Begriff "Strukturschaum" seien vorliegend insbesondere alle künstlich hergestellten Stoffe mit zelliger Struktur gefasst. Als Strukturschaum für den Flüssigkeitsabsorber kommt auch ein offenporiger Strukturschaum in Betracht, der auf den Flüssigkeitsabsorber treffende Flüssigkeit besonders effektiv aufnehmen kann. Der Flüssigkeitsabsorber kann in der Art einer Absorber-Platte oder Absorber-Matte ausgebildet sein.

Als Nebenschlussresonator wird vorliegend eine Vorrichtung verstanden, deren Hohlraum nicht von Frischluft durchströmt wird, sondern vielmehr eine Art Totvolumen darstellt.

Hinsichtlich der stabilen Befestigung des Flüssigkeitsabsorbers am Resonatorgehäuse eröffnen sich dem Fachmann vielfältige Optionen. Eine besonders zuverlässige Fixierung des Flüssigkeitsabsorbers aus dem Vlies bzw. Strukturschaum lässt sich erreichen, indem der Flüssigkeitsabsorber mittels einer Clipverbindung oder einer Schweißverbindung oder einer Klemmverbindung am Resonatorgehäuse befestigt wird.

Für den Fall, dass sich Teile des Flüssigkeitsabsorbers im Dauerbetrieb des Nebenschlussresonators in der Frischluftanlage einer Brennkraftmaschine wider Erwarten doch vom Resonatorgehäuse ablösen sollten, muss verhindert werden, dass diese "Absorber-Teile" über den Frischlufttrakt in den Verdichter des Abgasturboladers gelangen, da dies mit hoher Wahrscheinlichkeit zu einer Beschädigung des Abgasturboladers führen würde. Dies gilt selbstverständlich auch für andere Komponenten der Frischluftanlage, die im Frischlufttrakt stromab des Nebenschlussresonators angeordnet sind. Daher wird in einer weiteren bevorzugten Ausführungsform vorgeschlagen, in dem zum Ankoppeln des Nebenschlussresonators an die Frischluftleitung im Resonatorgehäuse ausgebildeten Durchbruch eine gitterartig ausgebildete Struktur vorzusehen. Eine solche Struktur kann etwa eine Mehrzahl von Durchgangsöffnungen umfassen, durch welche die zum funktionsgemäßen Betrieb des Nebenschlussresonators erforderliche Fluidverbindung zwischen Frischluftleitung und Hohlraum des Nebenschlussresonators sichergestellt ist. Besagte gitterartige Struktur ist hinsichtlich solcher Durchgangsöffnungen derart auszulegen, dass nur Absorber-Teile mit einer maximalen Teilchengröße die gitterartige Struktur passieren können, die aufgrund ihrer geringen Größe keine Gefahr für besagte beschädigungsempfindliche Komponenten darstellen.

Besonders zweckmäßig kann die gitterartige Struktur in der Art einer kostengünstig zu fertigenden Lochblende ausgebildet werden. Erfindungsgemäß weist das Resonatorgehäuse genau eine Gehäusewand auf, auf welcher innenseitig der Flüssigkeitsabsorber vorgesehen ist. In dazu alternativen Varianten die nicht unter den Wortlaut der Ansprüche fallen kann der Flüssigkeitsabsorber auch auf wenigstens zwei Gehäusewänden, vorzugsweise sogar auf allen Gehäusewänden mit Ausnahme einer einzigen Gehäusewand angebracht werden. Wenigstens eine Gehäusewand sollte vom Flüssigkeitsabsorber freigehalten werden, um die gewünschte akustische Funktionalität des Nebenschlussresonators nicht zu mindern. Erfindungsgemäß kann eine besonders gute Absorptionswirkung für in den Hohlraum eintretende Flüssigkeit durch den Flüssigkeitsabsorber aus dem Vlies bzw. Strukturschaum, ohne dass dadurch die akustischen Dämpfungseigenschaften des Nebenschlussresonators maßgeblich beeinflusst würden, erreicht werden, indem der Flüssigkeitsabsorber innenseitig auf einer Gehäusewand des Resonatorgehäuses angebracht wird, die benachbart zum Durchbruch bzw., falls vorhanden, zu der im Durchbruch angeordneten gitterartigen Struktur angeordnet ist. In einem solchen Szenario ist der Flüssigkeitsabsorber also in unmittelbarer Nähe zu den Durchgangsöffnungen der Lochblende angeordnet, so dass durch die gitterartige Struktur in das Resonatorgehäuse eintretende Flüssigkeit sofort vom Flüssigkeitsabsorber aufgenommen werden kann, noch bevor sie innerhalb des Hohlraums oder auf Gehäusewänden ohne Flüssigkeitsabsorber ausgefrieren kann.

Als besonders vorteilhaft erweist sich eine Anordnung von gitterartiger Struktur und Flüssigkeitsabsorber zueinander derart, dass die von der gitterartigen Struktur gebildeten Durchgangsöffnungen durch den Flüssigkeitsabsorber gerade nicht verschlossen werden.

In einer anderen bevorzugten Ausführungsform ist höchstens ein Fünftel, vorzugsweise höchstens ein Zehntel, höchst vorzugsweise höchstens ein Zwanzigstel, des Volumens des Hohlraums vom Flüssigkeitsabsorber ausgefüllt. Auf diese Weise lässt sich sicherstellen, dass die akustischen Dämpfungseigenschaften des Nebenschlussresonators nicht auf unerwünschte Weise beeinträchtigt werden.

Um eine gute akustische Ankopplung des Nebenschlussresonators an den Frischluftstrang der Frischluftanlage sicherzustellen, kann die gitterartige Struktur in einer bevorzugten Ausführungsform wenigstens zwei Durchgangsöffnungen, vorzugsweise eine Mehrzahl von Durchgangsöffnungen, umfassen. Um gleichzeitig zu gewährleisten, dass sich einzelne Teile des Flüssigkeitsabsorbers mit darin aufgenommener, gefrorener Flüssigkeit nicht von der Gehäusewand des Resonatorgehäuses lösen und durch den Durchbruch in den Frischluftstrang der Frischluftanlage gelangen können, wird gemäß dieser Ausführungsform vorgeschlagen, die Querschnittsfläche einer jeden Durchgangsöffnung der gitterartigen Struktur derart zu dimensionieren, dass sie höchstens ein Zehntel, bevorzugt höchstens eine Zwanzigstel, besonders bevorzugt höchstens ein Fünfzigstel, des Flächeninhalts einer vom Flüssigkeitsabsorber gebildeten Absorberoberfläche besitzt.

Eine besonders gute Dämpfungswirkung des Nebenschlussresonators wird erreicht, wenn der Flüssigkeitsabsorber benachbart zum wenigstens einen Durchbruch, insbesondere zur gitterartigen Struktur, oder im Abstand zum wenigstens einen Durchbruch, insbesondere zur gitterartigen Struktur, innen am Resonatorgehäuse angeordnet ist.

Die Erfindung betrifft weiterhin eine Frischluftanlage mit einem Frischlufttrakt zum Einbringen von Frischluft in einen oder mehrere Zylinder einer Brennkraftmaschine und/oder zum Bereitstellen von Frischluft an die Kathode einer Brennstoffzelle. Die Frischluftanlage umfasst weiterhin wenigstens einen vorangehend vorgestellten Nebenschlussresonator, welcher mittels des im Resonatorgehäuse vorgesehenen Durchbruchs fluidisch mit dem Frischlufttrakt kommuniziert.

Seine vorteilhafte Wirkung vermag der erfindungsgemäße Nebenschlussresonator in besonderem Maße zu entfalten, wenn der Durchbruch des Nebenschlussresonators stromauf eines Abgasturboladers und/oder stromab einer Blowby-Rückführung im Frischlufttrakt der Frischluftanlage angeordnet wird. In diesem Fall kann aus der Brennkraftmaschine abgeführtes und über besagte Blowby-Rückführung in den Frischlufttrakt und über diese in den Nebenschlussresonator eingeleitetes ÖI vom Flüssigkeitsabsorber aufgenommen werden.

Die Erfindung betrifft weiterhin eine Brennkraftmaschine sowie eine Brennstoffzelle mit einer solchen Frischluftanlage.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: einen Ausschnitt eines erfindungsgemäßen Nebenschlussresonators in einer perspektivischen Ansicht,
- Fig. 2: den Nebenschlussresonator der Figur 1 aus einer anderen Perspektive.

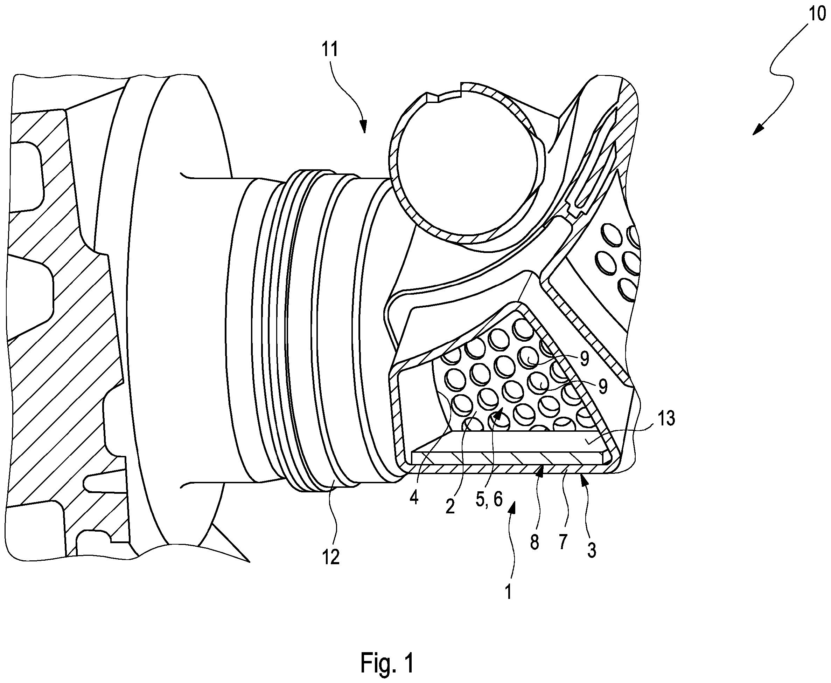

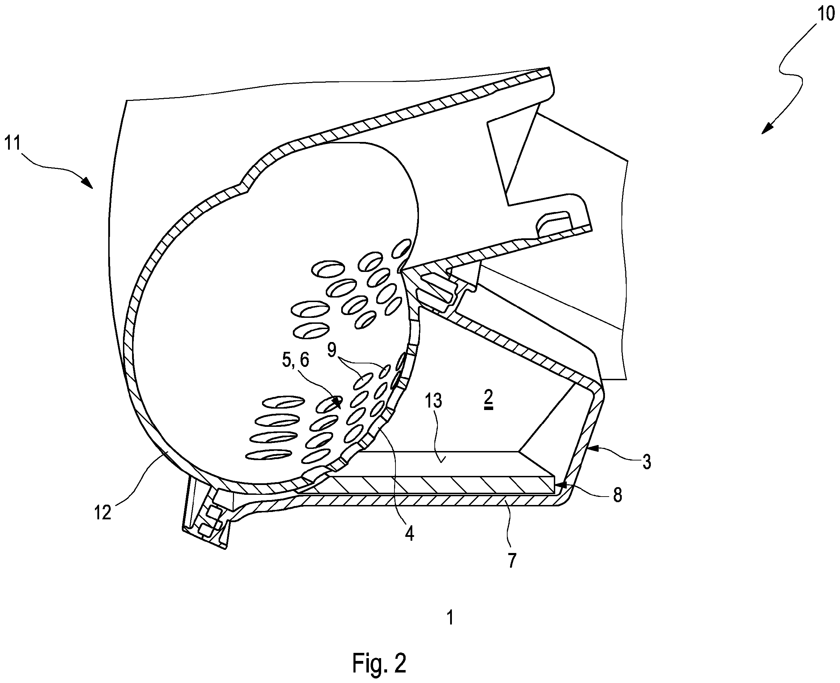

Die Figuren 1 und 2 illustrieren ein Beispiel eines erfindungsgemäßen Nebenschlussresonators jeweils in einer perspektivischen Ansicht, jedoch aus unterschiedlichen Blickwinkeln.

Die Figuren 1 und zeigen einen Frischlufttrakt 11 einer Frischluftanlage 10 einer Brennkraftmaschine. Im Frischlufttrakt 11 ist ein Nebenschlussresonator 1 mit einem einen Hohlraum 2 begrenzenden Resonatorgehäuse 3 vorgesehen. Dabei ist in der Darstellung der Figuren 1 und 2 ein Teil des Resonatorgehäuses 3 nicht dargestellt, d.h. das Resonatorgehäuse 3 ist scheinbar geöffnet gezeigt, um dem Betrachter einen Blick in den Hohlraum 2 zu ermöglichen.

Das Resonatorgehäuse 3 kann entsprechend den Figuren 1 und 2 integral an einer Frischluftleitung 12 des Frischlufttrakts 11 ausgeformt sein, durch welche Frischluft aus der Umgebung der Frischluftanlage 10 zum Verdichter eines Abgasturboladers (in den Figuren nicht gezeigt) transportiert wird. Im Resonatorgehäuse 3 ist ein Durchbruch 4 ausgebildet, durch welchen der Hohlraum 2 des Nebenschlussresonators 1 fluidisch mit der Frischluftleitung 12 des Frischlufttrakts 11 der Frischluftanlage 10 kommuniziert. Gleichzeitig wird mittels des Durchbruchs 4 auch die gewünschte akustische Kopplung des Nebenschlussresonators 1 mit der Frischluftanlage 10 realisiert. Der Durchbruch 4 des Nebenschlussresonators 11 kann stromauf des Abgasturboladers und stromab einer Blowby-Rückführung (nicht gezeigt) im Frischlufttrakt 11 der Frischluftanlage 10 angeordnet sein.

Wie die Figuren 1 und 2 weiter erkennen lassen, kann im Durchbruch 4 eine gitterartig ausgebildete Struktur 5 angeordnet sein, die beispielsweise als Lochblende 6 realisiert sein kann. Den Figuren 1 und 2 entnimmt man weiter, dass das Resonatorgehäuse 3 eine Gehäusewand 7 umfasst, auf welcher zum Aufnehmen von in den Hohlraum 2 eingetretener Flüssigkeit wie beispielsweise ÖI innenseitig ein Flüssigkeitsabsorber 8 aus einem Vlies und/oder einem Strukturschaum vorgesehen ist. Im Beispiel der Figuren 1 und 2 bedeckt der Flüssigkeitsabsorber 8 die Gehäusewand 7 dabei vollständig, in Varianten des Beispiels ist aber auch eine nur teilweise Bedeckung denkbar. Als Vlies kommt insbesondere ein Faservlies aus Kunststofffasern in Betracht, als Strukturschaum insbesondere ein offenporiger Strukturschaum, der die auf den Flüssigkeitsabsorber 8 treffende Flüssigkeit besonders effektiv aufzunehmen vermag. Der Flüssigkeitsabsorber 8 kann in der Art einer Absorber-Platte oder Absorber-Matte ausgebildet sein und beispielsweise mittels einer Clipverbindung, einer Schweißverbindung oder einer Klemmverbindung innen am Resonatorgehäuse 3 befestigt werden.

Eine besonders gute akustische Dämpfungswirkung durch den Nebenschlussresonator 1 wird erzielt, wenn der Flüssigkeitsabsorber 8 benachbart zum wenigstens einen Durchbruch 4 oder im Abstand zum wenigstens einen Durchbruch 4 innen am Resonatorgehäuse 3 angeordnet ist. Dies gilt insbesondere, wenn im Durchbruch 4 besagte gitterartige Struktur 5 angeordnet ist.

Die gitterartige Struktur 5 in Form einer Lochblende 6 dient dazu, sich von der Gehäusewand 7 wider Erwarten ablösende Teile des Flüssigkeitsabsorbers 8 im Hohlraum 2 zurückzuhalten, so dass diese nicht in den Frischlufttrakt 11 und über diesen in den stromab des Nebenschlussresonators 1 angeordneten Abgasturbolader (nicht gezeigt) gelangen können. Daher weist die gitterartige Struktur 5 in Gestalt der Lochblende 6 eine Mehrzahl von Durchgangsöffnungen 9 auf, wodurch die zum funktionsgemäßen Betrieb des Nebenschlussresonators grundsätzlich erforderliche Fluidverbindung zwischen der Frischluftleitung 12 und dem Hohlraum 2 des Nebenschlussresonators 1 erhalten bleibt. Die Durchgangsöffnungen 9 sind dabei derart dimensioniert, dass nur Vlies- bzw. Schaumstoffteile mit einer maximalen Größe die gitterartige Struktur 5 passieren können, die aufgrund ihrer Größe keine Gefahr für beschädigungsempfindliche Komponenten im Frischlufttrakt 11 der Frischluftanlage 10 darstellen. Im Beispiel der Figuren 1 und 2 beträgt die den Strömungsquerschnitt bestimmende Querschnittsfläche einer jeden Durchgangsöffnung 9 der gitterartigen Struktur 5 daher höchstens ein Zehntel des Flächeninhalts der vom Flüssigkeitsabsorber 8 gebildeten Absorberoberfläche. In Varianten des Beispiels kann die Querschnittsfläche höchstens eine Zwanzigstel oder sogar höchstens ein Fünfzigstel des Flächeninhalts der vom Flüssigkeitsabsorber 8 gebildeten Absorberoberfläche 13 betragen. Typische Absolut-Werte für die Querschnittsfläche einer Durchgangsöffnung 9 liegen im Bereich zwischen 1mm² und 80mm². Vorzugsweise liegen diese Werte im Bereich zwischen 10mm² und 30mm², besonders bevorzugt bei ca. 20mm².

Im Beispiel der Figuren sind die Durchgangsöffnungen 9 zur Ausbildung der Lochblende 6 rasterartig zueinander angeordnet. In Varianten des Beispiels sin jedoch auch andere Anordnungsgeometrien vorstellbar. In vereinfachten Varianten kann auch eine gitterartige Struktur mit wenigstens zwei Durchgangsöffnungen 9 vorgesehen werden.

Der Darstellung der Figur 1 entnimmt man, dass die gitterartiger Struktur 5 und der Flüssigkeitsabsorber 8 derart zueinander angeordnet sind, dass die von der gitterartigen Struktur 5 gebildeten Durchgangsöffnungen 9 durch den Flüssigkeitsabsorber 8 gerade nicht verschlossen werden.

Der erfindungswesentliche Flüssigkeitsabsorber 8 kann auch auf weiteren Gehäusewänden des Resonatorgehäuses 3 angebracht sein (in den Figuren nicht gezeigt), besonders bevorzugt sogar auf allen Gehäusewänden des Resonatorgehäuses 3 mit Ausnahme einer einzigen Gehäusewand (in den Figuren nicht gezeigt). Auf diese Weise lässt sich sicherstellen, dass die akustischen Dämpfungseigenschaften des Nebenschlussresonators 1 nicht auf unerwünschte Weise beeinträchtigt werden.

Eine besonders gute Absorptionswirkung für in den Hohlraum 2 eintretende Flüssigkeit, beispielsweise ÖI, durch den Flüssigkeitsabsorber 8, ohne dass dadurch die akustischen Dämpfungseigenschaften des Nebenschlussresonators 1 maßgeblich verschlechtert würden, kann erzielt werden, wenn der Flüssigkeitsabsorber 8 innenseitig auf genau einer Gehäusewand 7 des Resonatorgehäuses 3 angebracht wird. Vorzugsweise ist diese genau eine Gehäusewand 7 wie im Beispielszenario der Figuren gezeigt benachbart zu der im Durchbruch 4 vorgesehenen gitterartigen Struktur 5 angeordnet; in diesem Fall ist der Flüssigkeitsabsorber 8 in unmittelbarer Nähe zu den Durchgangsöffnungen 9 der Lochblende 6 angeordnet, so dass durch die gitterartige Struktur 5 in das Resonatorgehäuse 3 eintretende Flüssigkeit sofort vom Flüssigkeitsabsorber 8 aufgenommen wird, noch bevor sie außerhalb des Flüssigkeitsabsorbers 8 ausgefriert. In weiteren Varianten können wenigstens zwei zur gitterartigen Struktur 5 bzw. dem Durchbruch 4 benachbarte Gehäusewände mit einem Flüssigkeitsabsorber 8 ausgestattet werden.

Um sicherzustellen, dass die akustischen Eigenschaften des Nebenschlussresonators 1 durch das Vorhandensein des Flüssigkeitsabsorbers 8 nicht auf unerwünschte Weise beeinträchtigt werden, empfiehlt es sich weiterhin, höchstens ein Zehntel, vorzugsweise höchstens ein Zwanzigstel, des Volumens des Hohlraums 2 mit dem Material des Flüssigkeitsabsorbers 8 - also dem Vlies oder dem Strukturschaum - auszufüllen. Vorzugsweise beträgt eine Dicke des platten- und/oder mattenartig ausgebildeten Flüssigkeitsabsorbers 8 zwischen 2mm und 20mm, besonders bevorzugt kann sie zwischen 8mm und 12mm betragen.

## Patentansprüche

1. Nebenschlussresonator (1) für eine Frischluftanlage (10) einer Brennkraftmaschine und/oder einer Brennstoffzelle,
- mit einem einen Hohlraum (2) begrenzenden Resonatorgehäuse (3), wobei im Resonatorgehäuse (3) wenigstens ein Durchbruch (4) zum Verbinden des Nebenschlussresonators (1) mit der Frischluftanlage (10) vorgesehen ist,
- mit einem innen am Resonatorgehäuse (3) angebrachten und dieses wenigstens teilweise bedeckenden Flüssigkeitsabsorber (8) aus einem Vlies und/oder einem Strukturschaum zum Aufnehmen von in den Hohlraum (2) eingetretener Flüssigkeit,
**dadurch gekennzeichnet, dass**
- der Flüssigkeitsabsorber (8) auf genau einer Gehäusewand (7) des Resonatorgehäuses (3) angebracht ist,
- wobei der Flüssigkeitsabsorber (8) auf einer Gehäusewand (7) des Resonatorgehäuses (3) vorgesehen ist, die benachbart zum Durchbruch (4) und/oder zu der im Durchbruch (4) angeordneten Gitterstruktur (5) angeordnet ist.

2. Nebenschlussresonator nach Anspruch 1,
**dadurch gekennzeichnet, dass**
der Flüssigkeitsabsorber (8) mittels einer Clipverbindung oder einer Schweißverbindung oder einer Klemmverbindung am Resonatorgehäuse (3) befestigt ist.

3. Nebenschlussresonator nach Anspruch 1 oder 2,
**dadurch gekennzeichnet, dass**
in dem Durchbruch (4) eine gitterartig ausgebildete Struktur (5) vorgesehen ist, derart, dass die gitterartige Struktur (5) ein Hindurchtreten von Teilen des Flüssigkeitsabsorbers (8) durch den Durchbruch (4) in einem vom Resonatorgehäuse (3) abgelösten Zustand verhindert.

4. Nebenschlussresonator nach Anspruch 3,
**dadurch gekennzeichnet, dass**
die gitterartige Struktur (5) als Lochblende (6) ausgebildet ist.

5. Nebenschlussresonator nach Anspruch 3 oder 4,
**dadurch gekennzeichnet, dass**
- die gitterartige Struktur (5) wenigstens zwei Durchgangsöffnungen (9), vorzugsweise eine Mehrzahl von Durchgangsöffnungen (9), umfasst,
- die Querschnittsfläche einer Durchgangsöffnung (9) höchstens ein Zehntel, bevorzugt höchstens ein Zwanzigstel, besonders bevorzugt höchstens ein Fünfzigstel, eines Flächeninhalts der von dem Flüssigkeitsabsorber (8) gebildeten Absorberoberfläche (13) aufweist.

6. Nebenschlussresonator nach Anspruch 5,
**dadurch gekennzeichnet, dass**
die von der gitterartigen Struktur (5) gebildeten Durchgangsöffnungen (9) durch den Flüssigkeitsabsorber (8) gerade nicht verschlossen werden.

7. Nebenschlussresonator nach einem der vorhergehenden Ansprüche,
**dadurch gekennzeichnet, dass**
höchstens ein Fünftel, vorzugsweise höchstens ein Zehntel, höchst vorzugsweise höchstens ein Zwanzigstel, des Volumens des Hohlraums (2) vom Flüssigkeitsabsorber (8) ausgefüllt ist.

8. Nebenschlussresonator nach einem der vorhergehenden Ansprüche,
**dadurch gekennzeichnet, dass**
der Flüssigkeitsabsorber (8) benachbart zum wenigstens einen Durchbruch (4), insbesondere zur gitterartigen Struktur (5), oder im Abstand zum wenigstens einen Durchbruch (4), insbesondere zur gitterartigen Struktur (5), innen am Resonatorgehäuse (3) angeordnet ist.

9. Frischluftanlage (10),
- mit einem Frischlufttrakt (11) zum Einbringen von Frischluft in wenigstens einen Zylinder einer Brennkraftmaschine und/oder zum Bereitstellen von Frischluft an einer Kathode einer Brennstoffzelle,
- mit wenigstens einem Nebenschlussresonator (1) nach einem der vorhergehenden Ansprüche, welcher mittels des im Resonatorgehäuse (3) vorgesehenen Durchbruchs (4) fluidisch mit dem Frischlufttrakt (11) kommuniziert.

10. Frischluftanlage nach Anspruch 9,
**dadurch gekennzeichnet, dass**
der Durchbruch (4) des Nebenschlussresonators (11) stromauf eines Abgasturboladers und stromab einer Blowby-Rückführung im Frischlufttrakt (11) der Frischluftanlage (10) angeordnet ist.

11. Brennkraftmaschine mit einer Frischluftanlage (10) nach Anspruch 9 oder 10.

12. Brennstoffzelle mit einer Frischluftanlage (10) nach Anspruch 9 oder 10.

## Claims

1. Shunt resonator (1) for a fresh air apparatus (10) of an internal combustion engine and/or a fuel cell,
- with a resonator housing (3) defining a cavity (2), wherein in the resonator housing (3) at least one opening (4) is provided for connecting the shunt resonator (1) to the fresh air apparatus (10),
- with a fluid absorber (8) which is attached onto the inside of the resonator housing (3) and covers the latter at least partly made of fleece and/or structural foam for absorbing fluid that has entered the cavity (2),
**characterised in that**
- the fluid absorber (8) is attached onto exactly one housing wall (7) of the resonator housing (3),
- wherein the fluid absorber (8) is provided on a housing wall (7) of the resonator housing (3) which housing wall is arranged adjacent to the opening (4) and/or to the grid structure (5) arranged in the opening (4).

2. Shunt resonator according to claim 1,
**characterised in that**
the fluid absorber (8) is secured by means of a clip connection or weld connection or clamping connection onto the resonator housing (3).

3. Shunt resonator according to claim 1 or 2,
**characterised in that**
in the opening (4) a grid-like structure (5) is provided such that the grid-like structure (5) prevents the passage of portions of the fluid absorber (8) through the opening (4) in state when detached from the resonator housing (3).

4. Shunt resonator according to claim 3,
**characterised in that**
the grid-like structure (5) is designed as a perforated panel (6).

5. Shunt resonator according to claim 3 or 4,
**characterised in that**
- the grid-like structure (5) comprises at least two through openings (9), preferably a plurality of through openings (9),
- the cross-sectional area of a through opening (9) comprises at most a tenth, preferably at most a twentieth, particularly preferably at most a fiftieth, of a surface area of the absorber surface (13) formed by the fluid absorber (8).

6. Shunt resonator according to claim 5,
**characterised in that**
the through openings (9) formed by the grid-like structure (5) are in fact not closed by the fluid absorber (8).

7. Shunt resonator according to any of the preceding claims,
**characterised in that**
at most a fifth, preferably at most a tenth, more preferably at most a twentieth of the volume of the cavity (2) is filled by the fluid absorber (8).

8. Shunt resonator according to any of the preceding claims,
**characterised in that**
the fluid absorber (8) is arranged on the inside of the resonator housing (3) adjacent to at least one opening (4), in particular to the grid-like structure (5), or at a distance from at least one opening (4), in particular to the grid-like stricture (5).

9. Fresh air apparatus (10),
- with a fresh air tract (11) for introducing fresh air into at least one cylinder of an internal combustion engine and/or for providing fresh air to a cathode of a fuel cell,
- with at least one shunt resonator (1) according to any of the preceding claims, which communicates fluidically with the fresh air tract (11) by means of the opening (4) provided in the resonator housing (3).

10. Fresh air apparatus according to claim 9,
**characterised in that**
the opening (4) of the shunt resonator (11) is arranged upstream of an exhaust turbocharger and downstream of a blow-by return in the fresh air tract (11) of the fresh air apparatus (10).

11. Internal combustion engine comprising a fresh air apparatus (10) according to claim 9 or 10.

12. Fuel cell comprising a fresh air apparatus (10) according to claim 9 or 10.

## Revendications

1. Résonateur shunt (1) destiné à une installation d'air frais (10) d'un moteur à combustion interne et/ou d'une pile à combustible,
- avec un carter de résonateur (3) délimitant une cavité (2), dans lequel dans le carter de résonateur (3) au moins une ouverture (4) est prévue pour le raccordement du résonateur shunt (1) avec l'installation d'air frais (10),
- avec un absorbeur de liquide (8) monté à l'intérieur sur le carter de résonateur (3) et recouvrant celui-ci au moins partiellement composé d'un non-tissé et/ou d'une mousse structurelle pour la réception de liquide entré dans la cavité (2),
**caractérisé en ce que**
- l'absorbeur de liquide (8) est monté sur précisément une paroi de carter (7) du carter de résonateur (3),
- dans lequel l'absorbeur de liquide (8) est prévu sur une paroi de carter (7) du carter de résonateur (3), qui est agencée de manière contiguë à l'ouverture (4) et/ou à la structure à grille (5) agencée dans l'ouverture (4).

2. Résonateur shunt selon la revendication 1,
**caractérisé en ce que**
l'absorbeur de liquide (8) est fixé au moyen d'un raccordement par clip ou d'un raccordement par soudure ou d'un raccordement par serrage sur le carter de résonateur (3).

3. Résonateur shunt selon la revendication 1 ou 2,
**caractérisé en ce que**
dans l'ouverture (4) une structure réalisée comme une grille (5) est prévue, de telle manière que la structure de type grille (5) empêche un passage de particules de l'absorbeur de liquide (8) au travers de l'ouverture (4) dans un état détaché du carter de résonateur (3).

4. Résonateur shunt selon la revendication 3,
**caractérisé en ce que**
la structure de type grille (5) est réalisée comme diaphragme à trou (6).

5. Résonateur shunt selon la revendication 3 ou 4,
**caractérisé en ce que**
- la structure de type grille (5) comporte au moins deux ouvertures débouchantes (9), de préférence une pluralité d'ouvertures débouchantes (9),
- la surface de section transversale d'une ouverture débouchante (9) présente au plus un dixième, de préférence au plus un vingtième, particulièrement de préférence au plus un cinquantième, d'une superficie de la surface d'absorbeur (13) formée par l'absorbeur de liquide (8).

6. Résonateur shunt selon la revendication 5,
**caractérisé en ce que**
les ouvertures débouchantes (9) formées par la structure de type grille (5) ne sont pas justement fermées par l'absorbeur de liquide (8).

7. Résonateur shunt selon l'une quelconque des revendications précédentes,
**caractérisé en ce que**
au plus un cinquième, de préférence au plus un dixième, de manière préférée entre toutes au plus un vingtième du volume de la cavité (2) de l'absorbeur de liquide (8) est rempli.

8. Résonateur shunt selon l'une quelconque des revendications précédentes,
**caractérisé en ce que**
l'absorbeur de liquide (8) est agencé de manière contiguë à au moins une ouverture (4), en particulier à la structure de type grille (5), ou à distance d'au moins une ouverture (4), en particulier de la structure de type grille (5), à l'intérieur sur le carter de résonateur (3).

9. Installation d'air frais (10),
- avec un conduit d'air frais (11) pour l'introduction d'air frais dans au moins un cylindre d'un moteur à combustion interne et/ou pour la mise à disposition d'air frais sur une cathode d'une pile à combustible,
- avec au moins un résonateur shunt (1) selon l'une quelconque des revendications précédentes, qui communique fluidiquement au moyen de l'ouverture (4) prévue dans le carter de résonateur (3) avec le conduit d'air frais (11).

10. Installation d'air frais selon la revendication 9,
**caractérisé en ce que**
l'ouverture (4) du résonateur shunt (11) est agencée en amont d'un turbocompresseur à gaz d'échappement et en aval d'un retour de carter dans le conduit d'air frais (11) de l'installation d'air frais (10).

11. Moteur à combustion interne avec une installation d'air frais (10) selon la revendication 9 ou 10.

12. Pile à combustible avec une installation d'air frais (10) selon la revendication 9 ou 10.
